# EUROPEAN PATENT SPECIFICATION

(11) **EP 1 526 273 B1**
(45) Date of publication and mention of the grant of the patent: **15.09.2010**
(21) Application number: 04025075.5
(22) Date of filing: 21.10.2004
(51) Int. Cl.: F02M 35/024, B62K 11/00, F02M 35/16, F02M 35/04, F02B 61/02

(54) **Scooter type motorcycle**
Scooter
Scooter

(30) Priority: 21.10.2003 JP 2003360694
(43) Date of publication of application: 27.04.2005
(73) Proprietor: Yamaha Hatsudoki Kabushiki Kaisha, Iwata-shi, Shizuoka-ken (JP)
(72) Inventor: Inomori, Toshinori, Iwata-shi Shizuoka-ken (JP); Kikuchi, Katsuhiko, Iwata-shi Shizuoka-ken (JP); Matsusaka, Shigeru, Iwata-shi Shizuoka-ken (JP); Makino, Hironao, Iwata-shi Shizuoka-ken (JP)
(74) Representative: Grünecker, Kinkeldey, Stockmair & Schwanhäusser Anwaltssozietät

(56) References cited:
- EP-A- 0 317 093
- WO-A-02/101225
- US-B1- 6 251 151
- US-B1- 6 283 242
- PATENT ABSTRACTS OF JAPAN vol. 017, no. 099 (M-1373), 26 February 1993 (1993-02-26) & JP 04 292279 A (HONDA MOTOR CO LTD), 16 October 1992 (1992-10-16)
- PATENT ABSTRACTS OF JAPAN vol. 1996, no. 04, 30 April 1996 (1996-04-30) & JP 07 324656 A (SUZUKI MOTOR CORP), 12 December 1995 (1995-12-12)

## Description

The present invention relates to a scooter type motorcycle according to the preamble of independent claim 1. Such a scooter type motorcycle can be taken from JP 4-292279 A, wherein a projection is provided within the air cleaner casing.

A further example of a scooter type motorcycle is, e.g. known from JP-UM-B-1-43499 and includes a unit swing type power unit having an engine and a transmission case housing a power transmission device for transmitting a drive force of this engine to a rear wheel, has the rear wheel provided behind the transmission case, and supports an air cleaner above the transmission case.

Incidentally, for example, in the case in which an air cleaner is arranged above a transmission case of a unit swing type power unit and on one side of a rear wheel, it is necessary to make an arrangement for preventing rainwater, mud water, or the like from penetrating the inside of the air cleaner from an air inlet of the air cleaner and securing a sufficient capacity with a compact structure.

Therefore, it is an object of the invention to provide a scooter type motorcycle as indicated above, that is capable of preventing rainwater, mud water, or the like from penetrating the inside of an air cleaner from an air inlet of the air cleaner.

This object is solved in an inventive manner by a scooter type motorcycle having the features of independent claim 1.

Thus even if a flow rate of the air increases between the inlet opening of the air cleaner and the motorcycle body, it is possible to reduce the flow rate with the projecting portion before the air is induced from the opening, and rainwater, or the like can be prevented from penetrating the inside of the air cleaner from the air inlet.

Preferably, the air cleaner includes a first air cleaner case and a second air cleaner case that communicates with the first air cleaner case and is annexed thereto in a body width direction.

Further, preferably the projecting portion includes a first projecting portion projecting to an opening side from the first air cleaner case, and/or a second projecting portion projecting to the opening side from the second air cleaner case.

Furthermore, preferably a guide portion configured to cause induced air to collide with a vicinity of the opening of the air inlet is provided in the inside of the air cleaner, wherein preferably the guide portion extends substantially perpendicular to a flow of the air in the vicinity of the projecting portion.

Still further, preferably the projecting portion is provided with a lower end of a peripheral part of the opening projected to an opening side thereof, the projection portion preferably at least partially covering a lower side and/or an outer side of the opening.

Moreover, preferably the projecting portion comprises a first projecting portion which extends into the opening in a substantially horizontal manner and/or in that the projecting portion comprises a second projecting portion which extends into the opening in a substantially horizontal manner, in particular adjacent to the first projecting portion.

Also, preferably a scooter type motorcycle is provided, in particular configured as described above, wherein the air cleaner is supported above the transmission case of a unit swing type power unit, wherein an air cleaner element is sandwiched by a first air cleaner case and a second air cleaner case, and an air induction chamber is formed by a first case extending portion and a second case extending portion extending from air cleaner element support portions of the first air cleaner case and the second air cleaner case, respectively, and wherein an air inlet is provided at a forward end portion of the air induction chamber.

Further, according to a preferred embodiment of a scooter type motorcycle, a guide portion is provided in the air induction chamber.

According to a further preferred embodiment, the opening is directed towards a body side of the motorcycle body, in particular at a portion of the air cleaner being arranged forwardly of a rear wheel.

According to a furthermore preferred embodiment, a first case extending portion of a first air cleaner case is formed longer than a second case extending portion of a second air cleaner case of the air cleaner, the air inlet being formed according to a difference between a length of the case extending portion and a length of the case extending portion, wherein the air inlet preferably faces the body side of a motorcycle body.

According to a still further embodiment, an intake pressure sensor is provided on a downstream side chamber of the air cleaner, and/or in that a drainage discharge portion is provided in a lower part of the air cleaner.

Also, according to a preferred embodiment, a connecting portion of a hose for blow-by gas intake which is connected to a system for burning unburned gas is provided at the air cleaner, wherein preferably a hose for cylinder blow-by gas intake and/or a hose for cam chain chamber blow-by gas intake are connected to the hose for blow-by gas intake.

Further preferred embodiments of the invention are subject to the respective subclaims.

In the following, the invention will be described in greater detail by means of preferred embodiments thereof with reference to the attached drawings, wherein:

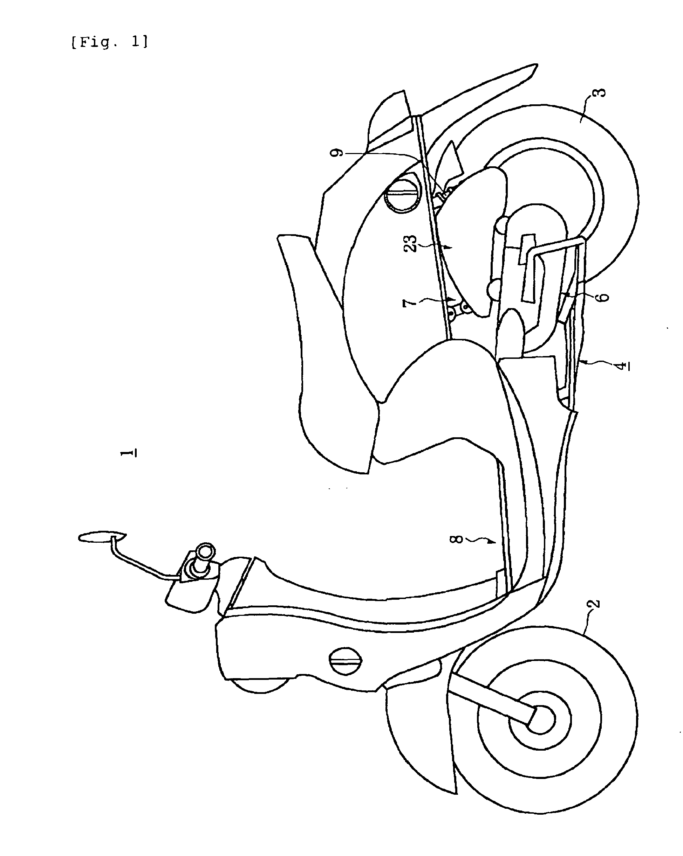

- Fig. 1: is a side view of a scooter type motorcycle according to a preferred embodiment of the present teaching;
- Fig. 2: is a plan view of an intake system;
- Fig. 3: is a front side view of an air cleaner,
- Fig. 4: is a plan view of the air cleaner;
- Fig. 5: is a sectional view of the air cleaner;
- Fig. 6: is a rear side view of the air cleaner;
- Fig. 7: is a front side view of a first air cleaner case;
- Fig. 8: is a plan view of the first air cleaner case;
- Fig. 9: is a rear side view of the first air cleaner case;
- Fig. 10: is a rear side view of a second air cleaner case;
- Fig. 11: is a plan view of the second air cleaner case;
- Fig. 12: is a rear side view of the second air cleaner case; and
- Fig. 13: is a sectional view along line XIII-XIII in Fig. 3.

In these figures, reference numeral 1 denotes the scooter type motorcycle according to this embodiment. This motorcycle 1 has a front wheel 2 and a rear wheel 3 and has a structure for driving the rear wheel 3 with a unit swing type power unit 4.

The unit swing type power unit 4 includes a water-cooled four-cycle single cylinder engine 5 and a transmission case 6 that is formed integrally with this engine 5 and extends backward on the left side of the rear wheel 3.

The unit swing type power unit 4 is coupled to a body 8 by a link mechanism 7 so as to swing freely in the vertical direction and supports the rear wheel 3 at a rear end of the transmission case 6. In addition, a cushion unit 9 is intervened between the rear end of the transmission case 6 and the body 8.

The transmission case 6 is located on one side, preferably the right or on the left side of the rear wheel 3 and/or the motorcycle body (8).

A power transmission device (not shown), which transmits power of the engine 5 to the rear wheel 3, is housed in the transmission case 6. This power transmission device includes a V belt type automatic transmission, a centrifugal clutch, and a gear type reducer.

An intake pipe 20 is connected to an upper side of the engine 5. This intake pipe 20 extends backward, a carburetor 21 is connected to this intake pipe 20, and an air cleaner 23 is connected to the carburetor 21 via a flexible pipe 22. The air cleaner 23 is arranged above the transmission case 6 of the unit swing type power unit 4.

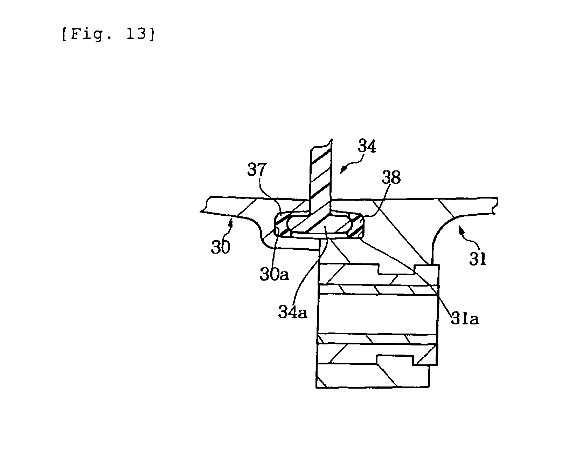

This air cleaner 23 is constituted by assembling a first air cleaner case 30 and a second air cleaner case 31, both of which are formed of synthetic resin. The first air cleaner case 30 and the second air cleaner case 31 are formed such that an upstream side chamber 32 and a downstream side chamber 33 are partitioned by an air cleaner element 34, and the upstream side chamber 32 communicates with the atmosphere by an air inlet 36 via an induction chamber 35. As this air cleaner element 34, a flat air cleaner element, which is well known conventionally, is adopted. The air cleaner element 34 is formed in a shape having a rib 34a that is nipped over the entire part of joint grooves 30a and 31 a of the first air cleaner case 30 and the second air cleaner case 31. In other words, as shown in Fig. 13, the rib 34a of the air cleaner element 34 is placed between the grooves 30a and 31 a of the first air cleaner case 30 and the second air cleaner case 31 via seal members 37 and 38, whereby the inside of the air cleaner 23 is demarcated into the upstream side chamber 32 and the downstream side chamber 33.

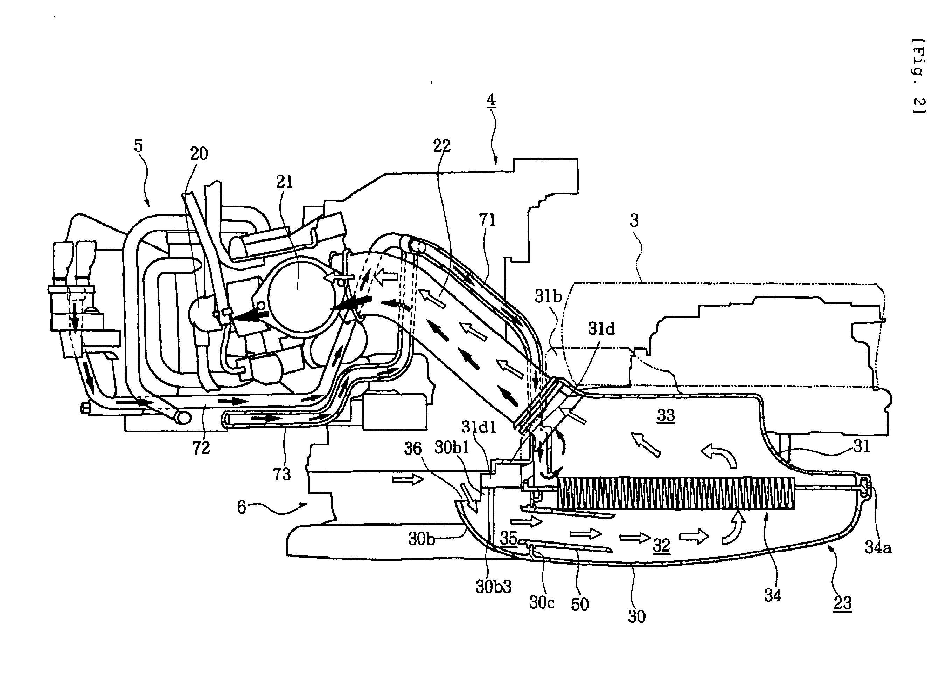

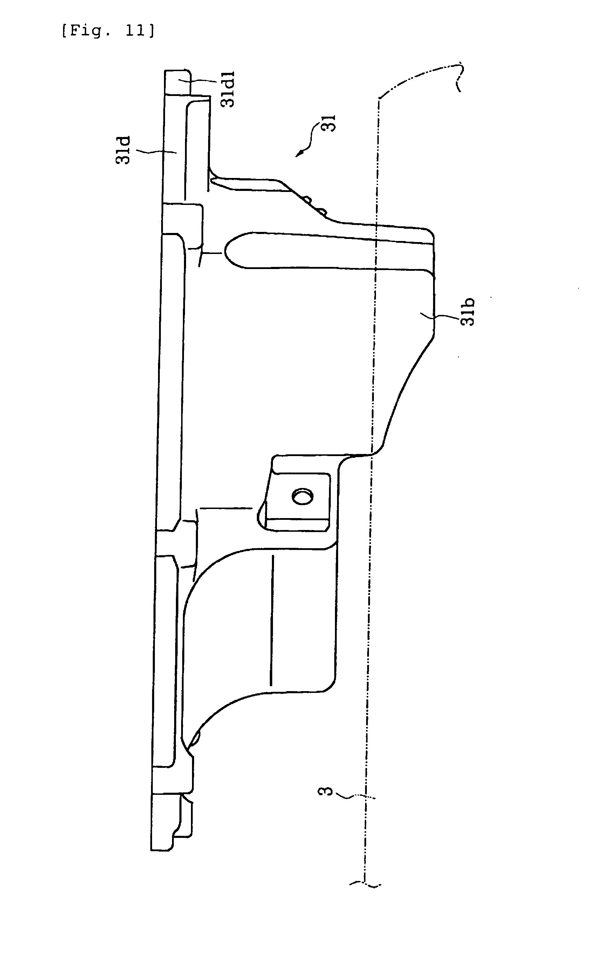

In this embodiment, as shown in Figs. 2, 4, and 11, an upper part of the second air cleaner case 31 is extended to above the rear wheel 3 to form an extended part 31b. This extended part 31 b is formed so as to extend from the center of the upper part to a connection opening 31 c of the flexible pipe 22 along a part on a front side. A volume of the downstream side chamber 33 is increased by this extended part 31 b.

In this way, since the upper part forming the downstream side chamber 33 of the air cleaner 23 is extended to above the rear wheel 3, the air cleaner 23 can be arranged closer to the inner side of the body, and it is possible to secure a sufficient volume with a compact structure.

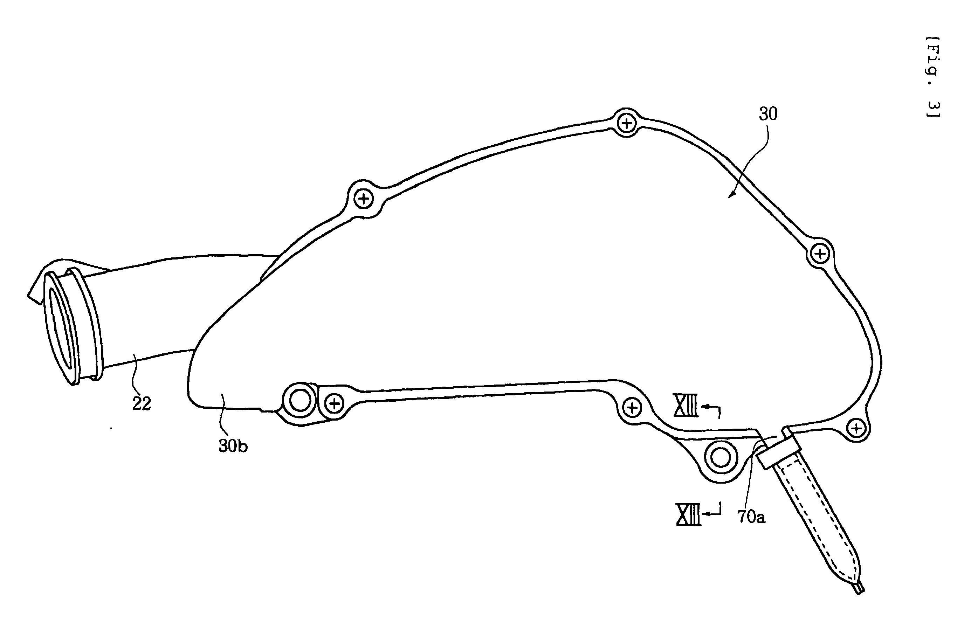

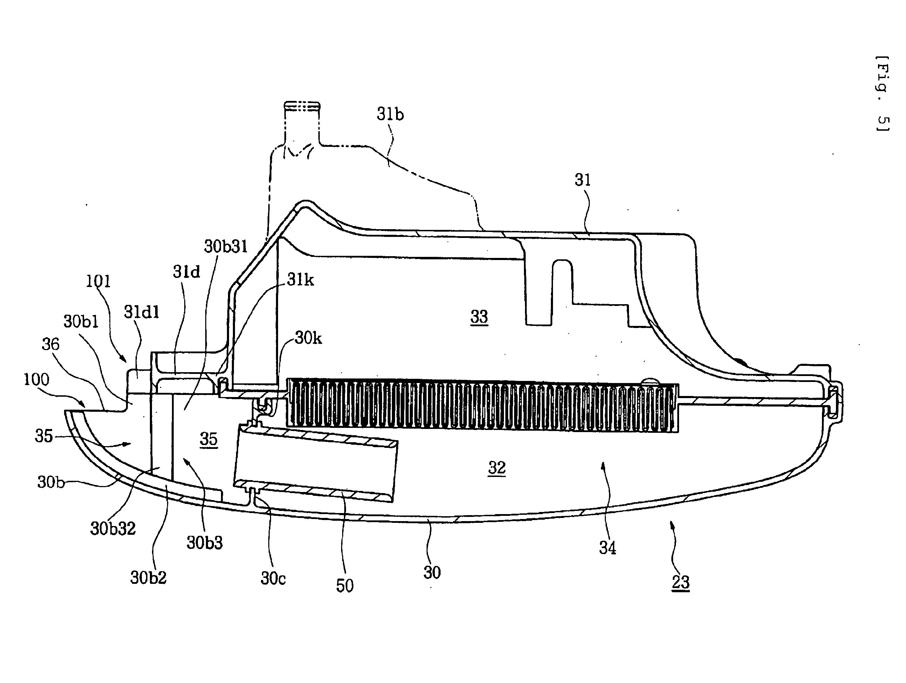

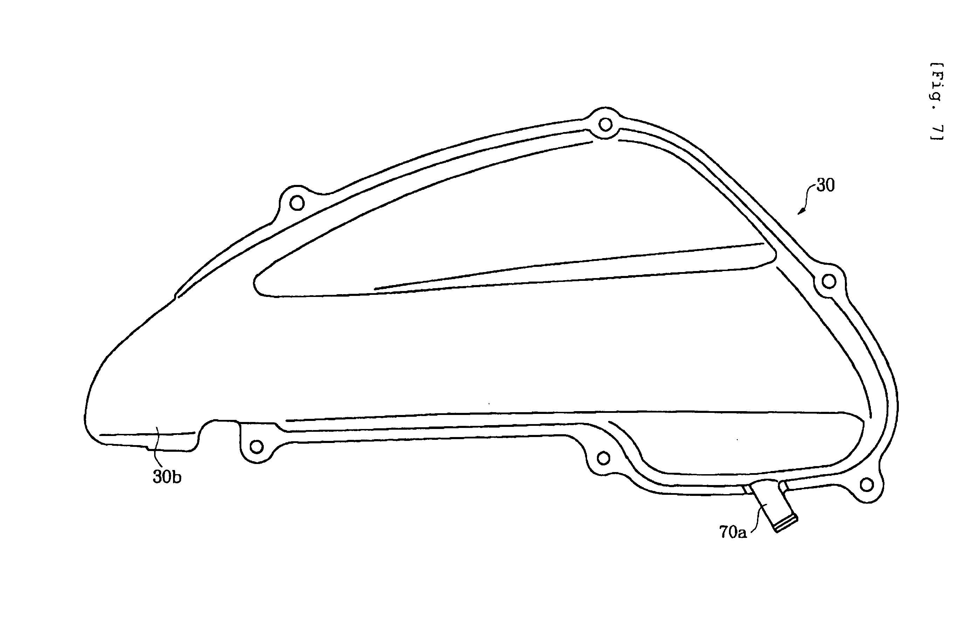

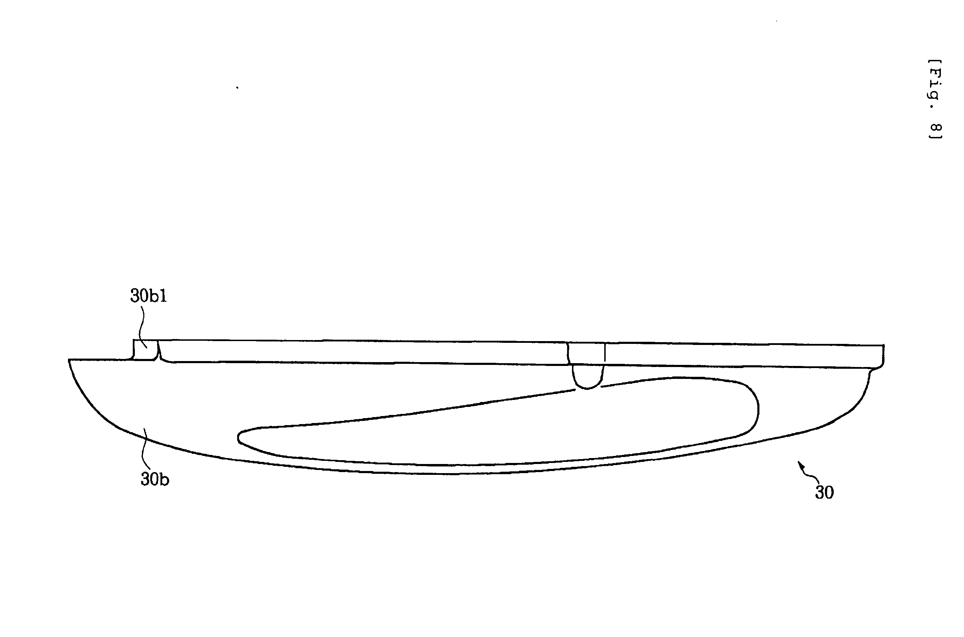

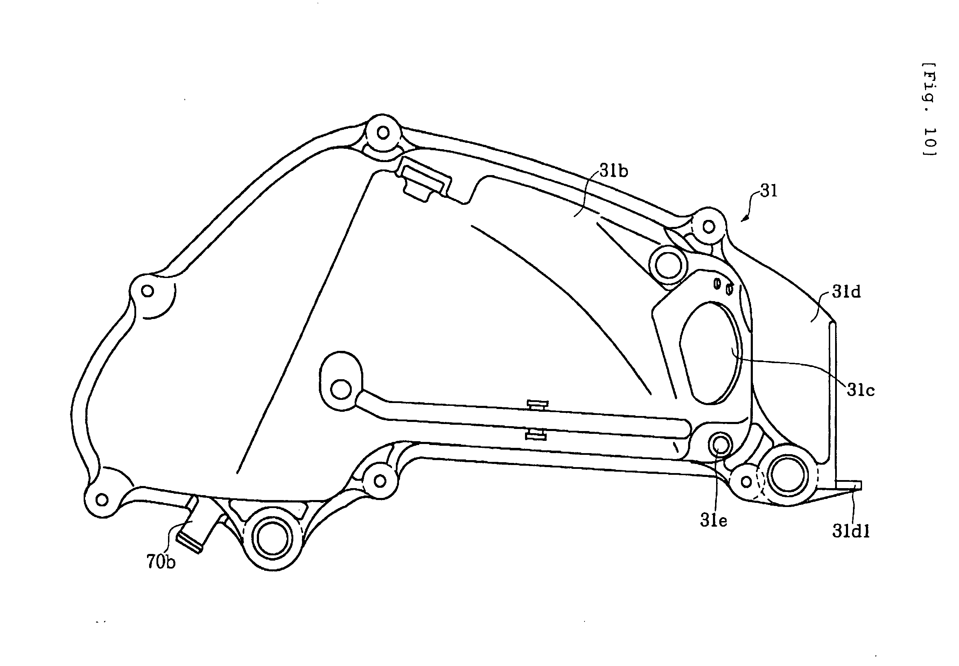

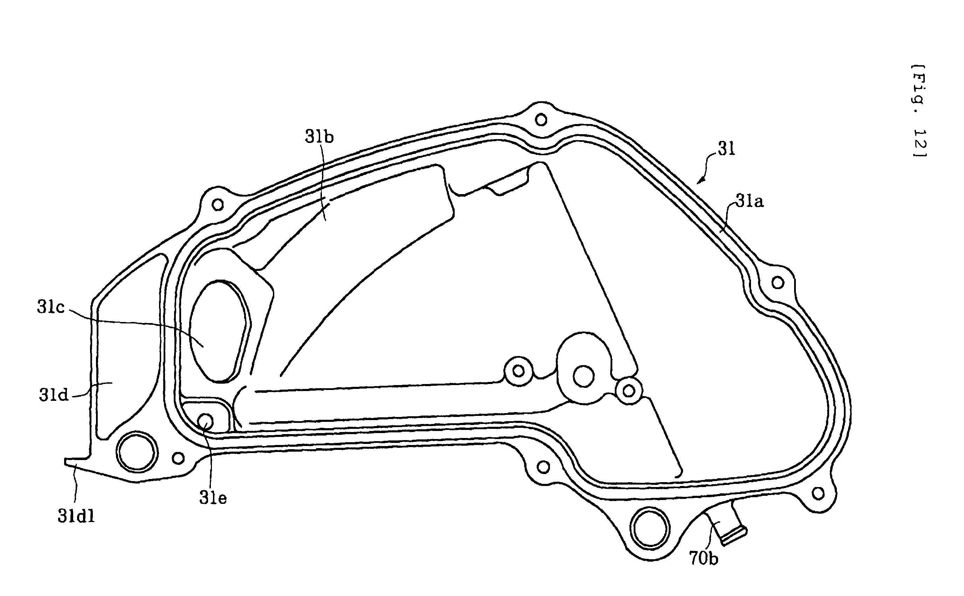

In addition, in this embodiment, as shown in Figs. 2 to 12, the air cleaner 23 is constituted such that the air cleaner element 34 is nipped and assembled between the first air cleaner case 30 and the second air cleaner case 31 and the upstream side chamber 32 and the downstream side chamber 33 are partitioned by the air cleaner element 34 in the air cleaner 23. A part of this first air cleaner case 30 is extended to the front side, a part of the second air cleaner case 31 is extended to the front side, and a first case extending portion 30b of the first air cleaner case 30 and a second case extending portion 31 d of the second air cleaner case 31 are joined to form the air induction chamber 35 communicating with the upstream side chamber 32.

The first case extending portion 30b of the first air cleaner case 30 is formed longer than the second case extending portion 31 d of the second air cleaner case 31, the air inlet 36 is formed according to a difference between a length of the case extending portion 30b and a length of the case extending portion 31 d, and this air inlet 36 faces the body side.

In this way, the air induction chamber 35, which is formed by the first case extending portion 30b and the second case extending portion 31d extending from air cleaner element supporting portions 30k and 31 k of the first air cleaner case 30 and the second air cleaner case 31, respectively, and includes the air inlet 36, is provided. Thus, it is possible to separate water before the water enters the cleaner case 23. In addition, an induction pipe 50 is assembled to a sidewall 30c of the first air cleaner case 30. Even if rainwater, mud water, or the like penetrates the air induction chamber 35 together with the air, the rainwater, the mud water, or the like is prevented from penetrating, although the air enters the upstream side chamber 32 through the induction pipe 50.

In this air cleaner 23, an opening 100 opening the air inlet 36 toward the body side is provided in this air cleaner 23, and a projecting portion 101, which extends parts of the first case extending portion 30b and the second case extending portion 31 d to the front side, respectively, and projects a lower end of a peripheral part of the opening 100 to the opening side with a first projecting portion 30b1 and a second projecting portion 31d1 of the first case extending portion 30b and the second case extending portion 31d, is provided.

In this embodiment, even if a flow rate of the air increases between the air cleaner 23 and the body such as the link mechanism 7, it is possible to reduce the flow rate with the projecting portion 101 before the air is induced from the opening, and rainwater or the like can be prevented from penetrating the inside from the air inlet 36.

The projecting portion 101 includes the first projecting portion 30b1, which projects to the opening side from the first air cleaner case 30, and the second projecting portion 31d1, which projects to the opening side from the second air cleaner case 31, and an area of the projecting portion 101 can be increased in the body width direction. Thus, it is possible to reduce a flow rate of the air effectively.

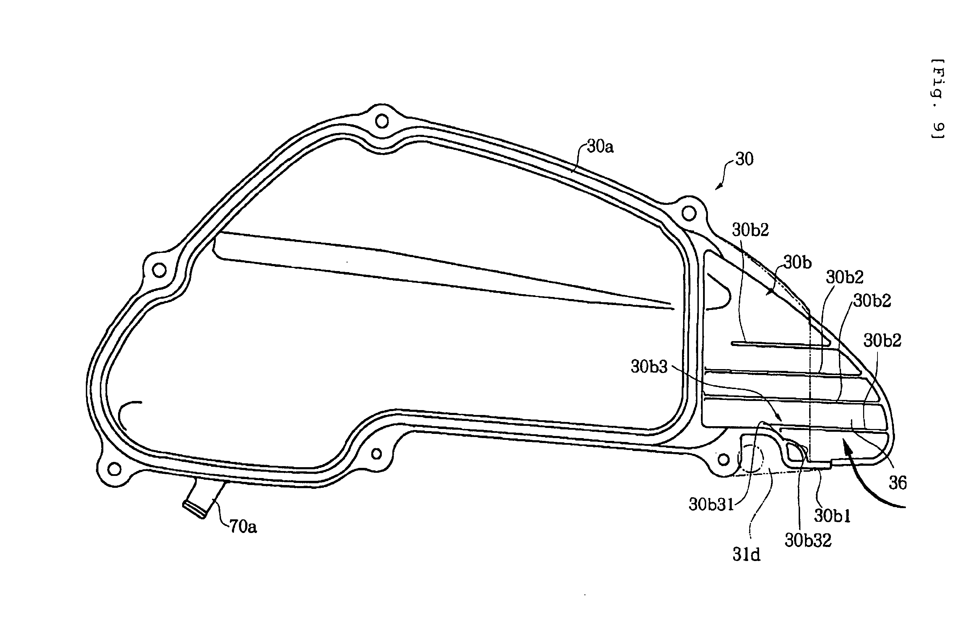

In this embodiment, as shown in Fig. 9, plural ribs 30b2 are formed horizontally in the inside of the first case extending portion 30b of the first air cleaner case 30. The first case extending portion 30b is reinforced by these ribs 30b2, and rainwater, mud water, or the like can be prevented from penetrating the inside of the induction chamber 35.

A guide portion 30b3 for guiding falling drops of water to the air inlet 36 is provided on a lower side in the inside of the first case extending portion 30b. This guide portion 30b3 has two-stage convex curved portions 30b31 and 30b32 and is extended substantially perpendicular to a flow of the air in the vicinity of the projecting portion 101. Thus, water can be separated immediately from the decelerated air. In this way, falling drops of water can be guided to the air inlet 36 smoothly and dropped to the outside by the guide portion 30b3 provided in the inside of the air cleaner 23.

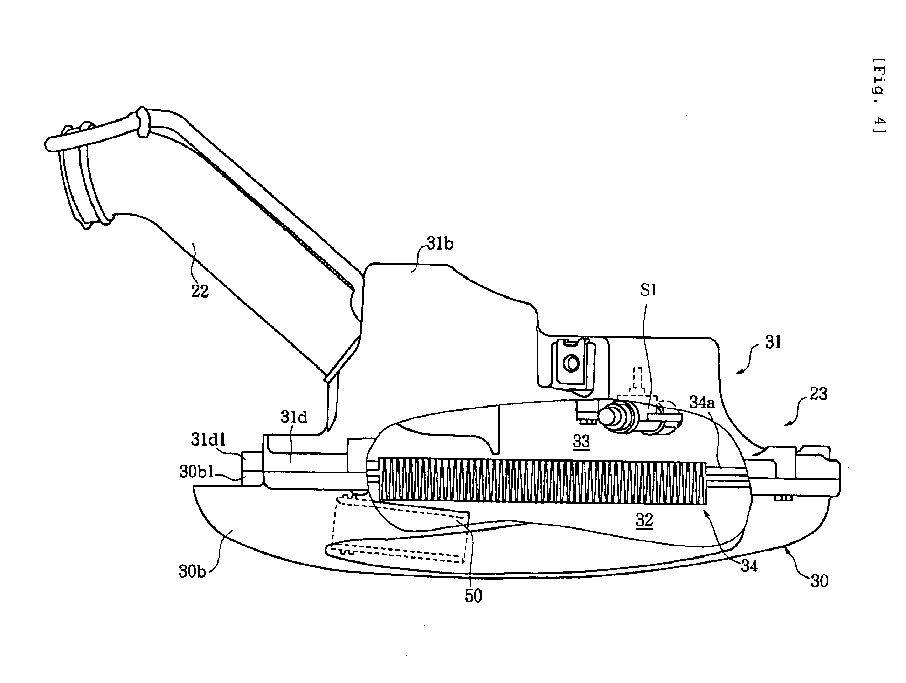

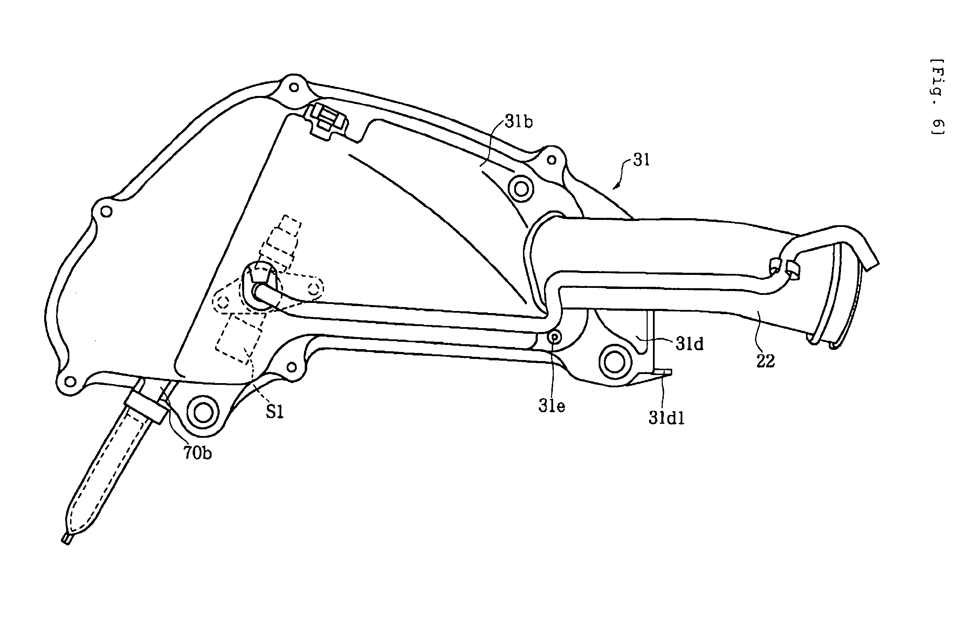

As shown in Figs. 4 and 6, an intake pressure sensor S1 is provided in the downstream side chamber 33 of the air cleaner 23, and engine control information can be obtained by this intake pressure sensor S1. In addition, in a lower part of the air cleaner 23, drainage discharge portions 70a and 70b are provided in basements of the first air cleaner case 30 and the second air cleaner case 31, respectively, and drainage accumulating in the upstream side chamber 32 and the downstream side chamber 33 is discharged by the drainage discharge portions 70a and 70b.

As shown in Figs. 2, 6, 10, and 12, a connecting portion 31 e of a hose for blow-by gas intake 71, which is connected to a system for burning unburned gas, is provided in the second air cleaner case 31. A hose for cylinder blow-by gas intake 72 and a hose for cam chain chamber blow-by gas intake 73 are connected to the hose for blow-by gas intake 71, and blow-by gas is sucked from a cylinder and a cam chain chamber of the engine 5.

As explained above, the present teaching provides a scooter type motorcycle that is capable of preventing rainwater, mud water, or the like from penetrating the inside from an air inlet of an air cleaner and securing a volume of the air cleaner.

As explained above, a scooter type motorcycle is provided, including: a unit swing type power unit that has an engine and a transmission case housing a power transmission device for transmitting a drive force of this engine to a rear wheel; and an air cleaner that is supported above the transmission case, wherein an opening for opening an air inlet toward a body side is provided in the air cleaner, and a projecting portion with a lower end of a peripheral part of the opening projected to the opening side is provided in the air cleaner.

Preferably, the air cleaner includes a first air cleaner case and a second air cleaner case that communicates with the first air cleaner case and is annexed in a body width direction, and the projecting portion includes a first projecting portion projecting to the opening side from the first air cleaner case and a second projecting portion projecting to the opening side from the second air cleaner case.

More preferably, a guide portion, which causes induced air to collide with the vicinity of the opening of the air inlet, is provided in the inside of the air cleaner.

Further, preferably the guide portion is extended substantially perpendicular to a flow of the air in the vicinity of the projecting portion.

Alternatively or additionally, a unit swing type power unit is provided that has an engine and a transmission case housing a power transmission device for transmitting a drive force of this engine to a rear wheel, and an air cleaner that is supported above the transmission case, wherein the air cleaner includes: a first air cleaner case; a second air cleaner case that communicates with the first air cleaner case and is annexed in a body width direction; an air cleaner element that is sandwiched by the first air cleaner case and the second air cleaner case; and an air induction chamber that is formed by a first case extending portion and a second case extending portion extending from air cleaner element support portions of the first air cleaner case and the second air cleaner case, respectively, and includes an air inlet.

According to a further preferred embodiment, a guide portion is provided in the air induction chamber.

According to the constitution mentioned above, the invention has advantages described below.

As explained, the opening for opening the air inlet toward the body side is provided in the air cleaner, and the projecting portion with the lower end of the peripheral part of the opening projected to the opening side is provided in the air cleaner. Thus, even if a flow rate of the air increases between the air cleaner and the body, it is possible to reduce the flow rate with the projecting portion before the air is induced from the opening, and rainwater, or the like can be prevented from penetrating the inside of the air cleaner from the air inlet.

Moreover, preferably the projecting portion includes the first projecting portion projecting to the opening side from the first air cleaner case and the second projecting portion projecting to the opening side from the second air cleaner case, and an area of the projecting portion can be increased in the body width direction. Thus, it is possible to reduce a flow rate of the air effectively.

According to an embodiment, the guide portion, which causes induced air to collide with the vicinity of the opening of the air inlet, is provided in the inside of the air cleaner. Thus, water can be separated from the induced air effectively, and the separated water can be discharged to the outside from the air inlet.

Preferably, the guide portion is extended substantially perpendicular to a flow of the air in the vicinity of the projecting portion. Thus, water can be separated immediately from the decelerated air.

Further, preferably the air induction chamber, which is formed by the first case extending portion and the second case extending portion extending from the air cleaner element supporting portions of the first air cleaner case and the second air cleaner case, respectively, and includes the air inlet, is provided. Thus, it is possible to separate water before the water enters the cleaner cases.

As explained before, a scooter type motorcycle 1 is provided including a unit swing type power unit 4 having an engine 5 and a transmission case 6 housing a power transmission device for transmitting a drive power of this engine 5 to a rear wheel, and an air cleaner 23 supported above the transmission case 6, an opening 100 for opening an air inlet 36 toward a body side is provided in the air cleaner 23, and a projecting portion 101 with a lower end of a peripheral part of the opening 100 projected to an opening side is provided in the air cleaner 23.

Accordingly, it is possible to prevent rainwater, mud water, or the like from penetrating the inside of an air cleaner from an air inlet of the air cleaner.

## Claims

1. Scooter type motorcycle, comprising an air cleaner (23) supported above a transmission case (6) of a unit swing type power unit (6), said air cleaner (23) comprises an air cleaner case (30,31) with an air inlet (36),
**characterized in that**
a first case extending portion (30b) of the air cleaner case is formed longer than a second case extending portion (31 d) of the air cleaner case, and said air inlet (36) is formed according to a difference between a length of the first case extending portion (30b) and a length of the second case extending portion (31d), and the air inlet (36) faces the body side of a motorcycle body (8) of the scooter type motorcycle,
said air inlet (36) having an air inlet opening (100) to atmosphere and a peripheral part of said air inlet opening (100) is provided with a projecting portion (30b1,31d1,101) projecting to the air inlet opening (100), adapted to reduce a flow rate of the introduced air at the air inlet opening (100).

2. Scooter type motorcycle according to claim 1, **characterized in that** the air cleaner (23) includes a first air cleaner case (30) provided with the first case extending portion (30b) and a second air cleaner case (31) provided with the second case extending portion (31 d) and that communicates with the first air cleaner case (30) and is annexed thereto in a body width direction.

3. Scooter type motorcycle according to claim 1 or 2, **characterized in that** the projecting portion includes a first projecting portion (30b1) projecting to an opening side from the first air cleaner case (30), and/or a second projecting portion (31d1) projecting to the opening side from the second air cleaner case (31).

4. Scooter type motorcycle according to at least one of the claims 1 to 3, **characterized in that** a guide portion (30b3) configured to cause induced air to collide with a vicinity of the opening (100) of the air inlet (36) is provided in the inside of the air cleaner (23), wherein preferably the guide portion (30b3) extends substantially perpendicular to a flow of the air in the vicinity of the projecting portion (30b1,31d1,101).

5. Scooter type motorcycle according to at least one of the claims 1 to 4, **characterized in that** the projecting portion (30b1,31d1,101) is provided with a lower end of a peripheral part (30b) of the opening (100) projected to an opening side thereof, the projection portion (30b1,31d1,101) preferably at least partially covering a lower side and/or an outer side of the opening (100).

6. Scooter type motorcycle according to at least one of the claims 1 to 5, **characterized in that** the projecting portion comprises a first projecting portion (30b1) which extends into the opening (100) in a substantially horizontal manner and/or **in that** the projecting portion comprises a second projecting portion (31b1) which extends into the opening (100) in a substantially horizontal manner, in particular adjacent to the first projecting portion (30b1).

7. Scooter type motorcycle according to at least one of the claims 1 to 6, wherein the air cleaner (21) is supported above a transmission case (6) of a unit swing type power unit (4), **characterized in that** an air cleaner element (34) is sandwiched by a first air cleaner case (30) and a second air cleaner case (31), and an air induction chamber (35) is formed by a first case extending portion (30b) and a second case extending portion (31d) extending from air cleaner element support portions (30k,31 k) of the first air cleaner case (30) and the second air cleaner case (31), respectively, and wherein an air inlet (36) is provided at a forward end portion of the air induction chamber (35).

8. Scooter type motorcycle according to at least one of the claims 1 to 7, **characterized in that** a guide portion (30b3) is provided in the air induction chamber (35).

9. Scooter type motorcycle according to at least one of the claims 1 to 8, **characterized in that** the opening (100) is directed towards a body side of the motorcycle body (8), in particular at a portion of the air cleaner (23) being arranged forwardly of a rear wheel (3).

10. Scooter type motorcycle according to at least one of the claims 1 to 9, **characterized in that** an intake pressure sensor (S1) is provided on a downstream side chamber (33) of the air cleaner (23), and/or **in that** a drainage discharge portion (70a,70b) is provided in a lower part of the air cleaner (23).

11. Scooter type motorcycle according to at least one of the claims 1 to 10, **characterized in that** a connecting portion (31 e) of a hose for blow-by gas intake (71) which is connected to a system for burning unburned gas is provided at the air cleaner (23), wherein preferably a hose for cylinder blow-by gas intake (72) and/or a hose for cam chain chamber blow-by gas intake (73) are connected to the hose for blow-by gas intake (71).

## Patentansprüche

1. Motorrad vom Roller- Typ, aufweisend einen Luftfilter (23), gelagert oberhalb eines Getriebegehäuses (6) einer Antriebseinheit (6) vom Schwingeinheit- Typ, wobei der Luftfilter (23) ein Luftfiltergehäuse (30, 31) mit einem Lufteinlass (36) aufweist, **dadurch gekennzeichnet, dass**
ein erster Gehäuseverlängerungsabschnitt (30b) des Luftfiltergehäuses länger als ein zweiter Gehäuseverlängerungsabschnitt (31d) des Luftfiltergehäuses gebildet ist und der Lufteinlass (36) entsprechend einer Differenz zwischen einer Länge des ersten Gehäuseverlängerungsabschnittes (30b) und einer Länge des zweiten Gehäuseverlängerungsabschnittes (31d) gebildet ist und der Lufteinlass (36) der Karosserieseite einer Motorkarosserie (8) des Motorrades vom Roller- Typ zugewandt ist,
wobei der Lufteinlass (36) eine Lufteinlassöffnung (100) zur Atmosphäre hat und ein Umfangsteil der Lufteinlassöffnung (100) mit einem vorspringenden Abschnitt (30b1, 31d1, 101) versehen ist, der zu der Lufteinlassöffnung (100) vorspringt, vorgesehen eine Strömungsrate der eingeleiteten Luft in die Lufteinlassöffnung (100) zu reduzieren.

2. Motorrad vom Roller- Typ nach Anspruch 1, **dadurch gekennzeichnet, dass** der Luftfilter (23) enthält ein erstes Luftfiltergehäuse (30), versehen mit dem ersten Gehäuseverlängerungsabschnitt (30b), und ein zweites Luftfiltergehäuse (31), versehen mit dem zweiten Gehäuseverlängerungsabschnitt (31d), und der mit dem ersten Luftfiltergehäuse (30) in Verbindung ist und daran in einer Richtung einer Karosseriebreite angeschlossen ist.

3. Motorrad vom Roller- Typ nach Anspruch 1 oder 2, **dadurch gekennzeichnet, dass** der vorspringende Abschnitt enthält einen ersten vorspringenden Abschnitt (30b1), der zu einer Öffnungsseite von dem ersten Luftfiltergehäuse (30) vorspringt, und / oder einen zweiten vorspringenden Abschnitt (31d1), der von der Öffnungsseite von dem zweiten Luftfiltergehäuse (31) vorspringt.

4. Motorrad vom Roller- Typ nach zumindest einem der Ansprüche 1 bis 3, **dadurch gekennzeichnet, dass** ein Führungsabschnitt (30b3) im Inneren des Luftfilters (23) vorgesehen ist, konfiguriert, eingeleitete Luft zu veranlassen, mit einer Nähe der Öffnung (100) des Lufteinlasses (36) zu kollidieren, wobei sich vorzugsweise der Führungsabschnitt (30b3) im Wesentlichen rechtwinklig zu einer Strömung der Luft in der Umgebung des vorspringenden Abschnittes (30b1, 31d1, 101) erstreckt.

5. Motorrad vom Roller- Typ nach zumindest einem der Ansprüche 1 bis 4, **dadurch gekennzeichnet, dass** der vorspringende Abschnitt (30b1, 31d1, 101) mit einem unteren Ende eines Umfangsteils (30b) der Öffnung (100), vorspringend zu einer Öffnungsseite derselben, versehen ist, wobei der Vorsprungsabschnitt (30b1, 31d1, 101) vorzugsweise zumindest teilweise eine untere Seite und / oder eine Außenseite der Öffnung (100) abdeckt.

6. Motorrad vom Roller- Typ nach zumindest einem der Ansprüche 1 bis 5, **dadurch gekennzeichnet, dass** der vorspringende Abschnitt einen ersten vorspringenden Abschnitt (30b1) aufweist, der sich in die Öffnung (100) in einer im Wesentlichen horizontalen Weise erstreckt, und / oder dadurch, dass der vorspringende Abschnitt einen zweiten vorspringenden Abschnitt (31d1) aufweist, der sich in die Öffnung (100) in einer im Wesentlichen horizontalen Weise, insbesondere benachbart zu dem ersten vorspringenden Abschnitt (30b1), erstreckt.

7. Motorrad vom Roller- Typ nach zumindest einem der Ansprüche 1 bis 6, wobei der Luftfilter (21) oberhalb eines Getriebegehäuses (6) einer Antriebseinheit (4) vom Schwingeinheit - Typ gelagert ist, **dadurch gekennzeichnet, dass** ein Luftfilterelement (34) sandwichartig zwischen einem ersten Luftfiltergehäuse (30) und einem zweiten Luftfiltergehäuse (31) eingesetzt ist, und eine Lufteinleitungskammer (35) durch einen ersten Gehäuseverlängerungsabschnitt (30b) und einen zweiten Gehäuseverlängerungsabschnitt (31d) gebildet ist, die sich jeweils von dem Luftfilterelement- Tragabschnitten (30k, 31 k) des ersten Luftfiltergehäuses und des zweiten Luftfiltergehäuses (31) erstrecken, und wobei ein Lufteinlass (36) an einem vorderen Endabschnitt der Lufteinleitungskammer (35) vorgesehen ist.

8. Motorrad vom Roller- Typ nach zumindest einem der Ansprüche 1 bis 7, **dadurch gekennzeichnet, dass** ein Führungsabschnitt (30b3) in der Lufteinleitungskammer (35) vorgesehen ist.

9. Motorrad vom Roller- Typ nach zumindest einem der Ansprüche 1 bis 8, **dadurch gekennzeichnet, dass** die Öffnung (100) in Richtung zu einer Karosserieseite der Motorradkarosserie (8) gerichtet ist, insbesondere an einem Abschnitt des Luftfilters (23), der vor einem Hinterrad (3) angeordnet ist.

10. Motorrad vom Roller- Typ nach zumindest einem der Ansprüche 1 bis 9, **dadurch gekennzeichnet, dass** ein Einlassdrucksensor (S1) an einer stromabwärtigen Seitenkammer (33) des Luftfilters (23) vorgesehen ist und / oder dadurch, dass ein Ablaufabgabeabschnitt (70a, 70b) in einem unteren Teil des Luftfilters (23) vorgesehen ist.

11. Motorrad vom Roller- Typ nach zumindest einem der Ansprüche 1 bis 10, **dadurch gekennzeichnet, dass** ein Verbindungsabschnitt (31e) eines Schlauchs für einen Beiblas- Gaseinlass (71), der mit einem System zum Verbrennen unverbrannten Gases verbunden ist, an dem Luftfilter (23) vorgesehen ist, wobei vorzugsweise ein Schlauch für einen Zylinder- Beiblas- Gaseinlass (72) und / oder ein Schlauch für den Nockenkettenkammer- Beiblas- Gaseinlass (73) mit dem Schlauch für den Beiblas- Gaseinlass (71) verbunden ist.

## Revendications

1. Motocycle du type scooter, comprenant un filtre à air (23) supporté au-dessus d'un carter de transmission (6) d'un groupe moteur du type pivotant (6), le filtre à air (23) comprenant un carter de filtre à air (30, 31) avec une admission d'air (36),
**caractérisé en ce qu'**une première partie (30b) du carter de filtre à air est plus longue qu'une seconde partie (31d) du carter de filtre à air, et l'admission d'air (36) est formée suivant une différence entre une longueur de la première partie de carter (30b) et une longueur de la seconde partie de carter (31d), et l'admission d'air (36) se trouve en face du côté d'un corps de motocycle (8) du motocycle du type scooter,
ladite admission d'air (36) ayant une ouverture d'admission d'air (100) vers l'atmosphère, et une partie périphérique de ladite ouverture d'admission d'air (100) est pourvue d'une partie saillante (30b1, 31d1, 101) qui dépasse de l'ouverture d'admission d'air (100) et qui est apte à réduire un débit de l'air introduit, au niveau de l'ouverture d'admission d'air (100).

2. Motocycle du type scooter selon la revendication 1, **caractérisé en ce que** le filtre à air (23) comprend un premier carter de filtre à air (30) qui est pourvu de la première partie de carter (30b), et un second carter de filtre à air (31) qui est pourvu de la seconde partie de carter (31d), qui communique avec le premier carter de filtre à air (30) et qui est rapporté sur celui-ci dans le sens de la largeur du corps.

3. Motocycle du type scooter selon la revendication 1 ou 2, **caractérisé en ce que** la partie saillante comprend une première partie saillante (30b1) qui dépasse vers un côté d'ouverture à partir du premier carter de filtre à air (30), et/ou une seconde partie saillante (31d1) qui dépasse vers le côté d'ouverture à partir du second carter de filtre à air (31).

4. Motocycle du type scooter selon l'une au moins des revendications 1 à 3, **caractérisé en ce qu'**une partie de guidage (30b3) conçue pour que l'air introduit arrive près de l'ouverture (100) de l'admission d'air (36) est prévue à l'intérieur du filtre à air (23), étant précisé que la partie de guidage (30b3) s'étend globalement perpendiculairement à un écoulement de l'air près de la partie saillante (30b1, 31d1, 101).

5. Motocycle du type scooter selon l'une au moins des revendications 1 à 4, **caractérisé en ce que** la partie saillante (30b1, 31d1, 101) est pourvue d'une extrémité inférieure d'une partie périphérique (30b) de l'ouverture (100) qui dépasse vers un côté d'ouverture de celle-ci, la partie saillante (30b1, 31d1, 101) couvrant de préférence au moins en partie un côté inférieur et/ou un côté extérieur de l'ouverture (100).

6. Motocycle du type scooter selon l'une au moins des revendications 1 à 5, **caractérisé en ce que** la partie saillante comprend une première partie saillante (30b1) qui s'avance dans l'ouverture (100) globalement à l'horizontale et/ou **en ce que** la partie saillante comprend une seconde partie saillante (31d1) qui s'avance dans l'ouverture (100) globalement à l'horizontale, en particulier près de la première partie saillante (30b1).

7. Motocycle du type scooter selon l'une au moins des revendications 1 à 6, dans lequel le filtre à air (21) est supporté au-dessus d'un carter de transmission (6) d'un groupe moteur du type pivotant (4),
**caractérisé en ce qu'**un élément de filtre à air (34) est placé en sandwich entre un premier carter de filtre à air (30) et un second carter de filtre à air (31), et une chambre d'admission d'air (35) est formée par une première partie de carter (30b) et une seconde partie de carter (31d) qui s'étendent à partir de parties de support d'élément de filtre à air (30k, 31k) du premier carter de filtre à air (30) et du second carter de filtre à air (31), respectivement, et une admission d'air (36) étant prévue sur une partie d'extrémité avant de la chambre d'admission d_{'}air (35).

8. Motocycle du type scooter selon l'une au moins des revendications 1 à 7, **caractérisé en ce qu'**une partie de guidage (30b3) est prévue dans la chambre d'admission d'air (35).

9. Motocycle du type scooter selon l'une au moins des revendications 1 à 8, **caractérisé en ce que** l'ouverture (100) est dirigée vers un côté du corps de motocycle (8), en particulier au niveau d'une partie du filtre à air (23) qui est disposée à l'avant d'une roue arrière (3).

10. Motocycle du type scooter selon l'une au moins des revendications 1 à 9, **caractérisé en ce qu'**un capteur de pression d'admission (S1) est prévu sur une chambre côté aval (33) du filtre à air (23), et/ou **en ce qu'**une partie d'évacuation (70a, 70b) est prévue dans une partie inférieure du filtre à air (23).

11. Motocycle du type scooter selon l'une au moins des revendications 1 à 10, **caractérisé en ce qu'**une partie de liaison (31e) d'une tubulure pour l'admission de fuite des gaz (71) qui est reliée à un système destiné à brûler les gaz non brûlés est prévue au niveau du filtre à air (23), étant précisé que, de préférence, une tubulure pour l'admission de fuite des gaz de cylindre (72) et/ou une tubulure pour l'admission de fuite des gaz de chambre de chaîne à came (73) sont reliées à la tubulure pour l'admission de fuite des gaz (71).
